# FASCICULE DE BREVET EUROPEEN

(11) **EP 1 470 690 B1**
(45) Date de publication et mention de la délivrance du brevet: **09.05.2007**
(21) Numéro de dépôt: 03734739.0
(22) Date de dépôt: 28.01.2003
(51) Int. Cl.: H04L 29/06

(54) **PROCEDE ET DISPOSITIF DE TRANSMISSION DE MESSAGE DE GESTION DE TITRE D'ACCES**
VERFAHREN UND VORRICHTUNG ZUR ÜBERTRAGUNG VON STEUERUNGSNACHRICHTEN EINES ZUGRIFFSTICKETS
METHOD AND DEVICE FOR TRANSMISSION OF ENTITLEMENT MANAGEMENT MESSAGES

(30) Priorité: 31.01.2002 FR 0201146
(43) Date de publication de la demande: 27.10.2004
(73) Titulaire: Viaccess, 75002 Paris (FR)
(72) Inventeur: BONS, Pascal, F-78280 Guyancourt (FR); HAMOU, Bernard, F-95230 Soisy sous Montmorency (FR)
(74) Mandataire: Poulin, Gérard
(86) Numéro de dépôt international: PCT/FR2003/000260
(87) Numéro de publication internationale: WO 2003/065650

(56) Documents cités:
- EP-A- 0 866 615
- EP-A- 1 111 923

## Description

### Domaine technique

L'invention se situe dans le domaine des transmissions de données et/ou de services embrouillés vers une pluralité de terminaux reliés à un réseau d'échange de données et concerne plus particulièrement un procédé de transmission de messages de gestion de titres d'accès (EMM) à ces données et à ces services ainsi qu'un dispositif destiné à mettre en oeuvre le procédé.

### Etat de la technique antérieure

Avec le développement des échanges de données à travers des réseaux ouverts tels que le réseau Internet, la sécurisation des échanges prend une importance croissante dans les activités des opérateurs et les fournisseurs de services. Cette sécurisation a pour buts essentiels :
- d'éviter que les transactions faites à travers le réseau ne soient interceptées ;
- d'assurer l'intégrité des données, c'est-à-dire, déterminer si les données transmises n'ont pas été altérées durant la communication ;
- de permettre l'authentification, c'est-à-dire, assurer l'identité des correspondants d'une transaction, et la confidentialité consistant à rendre l'information inintelligible à d'autres personnes que les acteurs de la transaction.

L'authentification est réalisée par le contrôle d'accès qui permet l'accès à des ressources seulement aux personnes autorisées.

Dans le domaine de la diffusion de programmes audiovisuels cryptés, la norme DVB définit un algorithme commun d'embrouillage CSA (pour Common Scrambling Algorithm), mais ne prévoit rien en ce qui concerne le contrôle d'accès laissant aux opérateurs et aux fournisseurs de services la liberté de définir leurs propres systèmes.

La norme DVB prévoit cependant le transport de données de contrôle d'accès qui sont récupérées à la réception au moyen de descripteurs de données dans une table de contrôle d'accès (CAT, pour Conditional Access Table) insérée dans le multiplex de transport MPEG, ainsi qu'au moyen d'autres paquets de données privées indiqués au moyen de descripteurs de données dans une table de programme (PMT, pour Program Map Table) qui contient les numéros d'identification PID (pour Packet Identifier) de chaque composante de programme codée sous la forme d'un train élémentaire MPEG PES, (pour Packetized Elementary Stream).

Généralement, les informations nécessaires au désembrouillage sont transmises dans des messages de contrôle d'accès spécifiques appelés messages d'accès conditionnel CAM (pour Conditional Access Messages), qui comporte au moins un message de contrôle des titres d'accès ECM (pour Entitlement Control Message) et un message de gestion des titres d'accès EMM (pour Entitlement Management Message).

Ces messages d'accès conditionnel sont générés à partir d'au moins de trois données d'entrées :
- un mot de contrôle CW (pour Control Word) destiné à initialiser la séquence de désembrouillage,
- une clé de service (Service Key) utilisée pour chiffrer le mot de contrôle pour un groupe d'un ou plusieurs utilisateurs,
- une clé utilisateur (User Key) utilisée pour chiffrer la clé de service.

Les ECM sont une fonction du mot de contrôle et de la clé de service tandis que les EMM sont fonction de la clé de service et de la clé utilisateur.

Les ECM et les EMM sont transmis périodiquement et en permanence aux terminaux afin de garantir leur réception par les utilisateurs.

A la réception, le principe de déchiffrement consiste à retrouver la clé de service à partir des EMM et de la clé utilisateur contenue dans un processeur de sécurité par exemple une carte à puce. La clé de service est ensuite utilisée pour déchiffrer les ECM afin de retrouver le mot de contrôle permettant l'initialisation du système de désembrouillage.

Dans les systèmes de contrôle d'accès connus, la transmission des EMM est effectuée en séquence, sans priorité ni ordonnancement indépendamment des fonctions spécifiques de chaque message EMM transmis. Or, les différents EMM ne concernent pas nécessairement les mêmes données ni les mêmes services et par conséquent ne sont pas soumis aux mêmes contraintes de transmission. En effet, les EMM peuvent être répartis en trois grandes familles qui diffèrent par leurs fonctions respectives et par leurs conditions de transmission. On peut citer à titre d'exemple :
- les messages liés au contrat passé entre l'abonné et l'opérateur, tel que par exemple un abonnement à un service pendant une durée déterminée. Dans ce cas, les messages EMM sont transmis en permanence pendant la durée de l'abonnement. Cette transmission représente un flux de données très important qui doit cependant être maintenu pour assurer leur réception par l'abonné ;
- les messages dits dynamiques qui correspondent à un besoin immédiat d'un abonné tel que par exemple l'achat d'une séance ou d'un événement.
- les messages de gestion technique du processeur de sécurité décidée par l'opérateur en accord avec l'abonné.

La transmission en séquence, sans priorité ni ordonnancement de ces messages EMM génère un temps de cycle important, variant d'un site à l'autre, et provoquant un temps d'attente important chez l'abonné. En outre, le mélange de messages ayant des caractères et des degrés d'urgence différents conduit à une occupation non optimisée de la bande passante.

Le but de l'invention est de pallier les inconvénients décrits ci-dessus.

Le document EP-A-1 111 923 décrit une méthode de gestion d'un système de contrôle d'accès conditionnel comportant une pluralité d'abonnés équipé chacun d'un terminal muni d'un module d'accès conditionnel et d'un circuit sécurisé pour stocker les titres d'accès, chaque terminal reçoit un ECM comprenant une première clé CW chiffrée par une clé de service P_{T}, chaque circuit sécurisé reçoit un message EMM comprenant au moins la clé de service P_{T} nécessaire de déchiffrement du CW.

Cette méthode a pour but de tracer un circuit sécurisé utilisé frauduleusement en envoyant aux terminaux des clés différentes pour obtenir les premières clés CW et en observant les informations de clé fournie par un pirate. A cet effet, des messages EMM de recherche sont envoyés à une partie des terminaux. Ces messages comprennent au moins la clé P_{T} et une clé factice (P_{D1} ou P_{D2}) et des identifiants desdites clés P_{T} et P_{D1} ou P_{D2}. Selon cette méthode, des premiers messages EMM comprenant P_{T} et P_{D1} sont transmis à une première partie des terminaux et des seconds messages EMM comprenant P_{T} et P_{D2} sont transmis à une seconde partie des terminaux, un message ECM identifiant la clé P_{T} qui doit être utilisée pour décrypter CW est ensuite transmis à tous les terminaux immédiatement avant que ladite clé CW est requise pour déchiffrer le contenu.

Ainsi, le pirate est obligé de publier toute les clés, y compris P_{D1} et P_{D2}, longtemps avant que la clé CW ne soit requise. Ceci permet de tracer le pirate qui distribue P_{D1} et P_{D2}.

Le document EP 0 866 615 A2 décrit un appareil pour transmettre à des terminaux des données numériques multiplexées sous forme embrouillée dans lesquels des données de déchiffrement propres à chaque terminal et des données de déchiffrement communes aux différents terminaux sont transmises avec lesdites données embrouillées.

### Exposé de l'invention

L'invention propose un procédé de transmission de messages de gestion de titres d'accès (EMM) à des données et/ou services fournis à une pluralité de terminaux dans un réseau d'échange de données, caractérisé en ce qu'il comporte les étapes suivantes :
A l'émission :
   - définir un ensemble de types de messages EMM en fonction d'au moins un critère représentatif du type de données et/ou services fournis ;
   - définir une pluralité de types de voies logiques de transmission et associer à chaque type de voie au moins un paramètre (STREAM_TYPE) destiné à indiquer aux terminaux les types d'EMM transitant sur chacune des voies logiques décrites;
   - affecter à chaque type de message EMM au moins une voie parmi les voies logiques de transmission définies
   - transmettre le paramètre (STREAM_TYPE) et lesdites voies logiques à chaque terminal ;
   - multiplexer les voies logiques de transmission dans un même flux de données ;
   - transmettre ledit flux de données aux terminaux ;
et à la réception :
   - chaque terminal filtre les EMM entrants en fonction du paramètre (STREAM_TYPE) et d'au moins un paramètre d'état dépendant du fonctionnement courant du terminal.

Préférentiellement, le paramètre (STREAM_TYPE) est transmis à chaque terminal dans une structure de données dynamique représentant une voie logique de contrôle.

Selon un mode préféré de réalisation, la structure dynamique est transmise dans un EMM chiffré et comporte au moins l'un des champs suivants :
- un premier champ (EMM_XID) destiné à permettre au terminal d'identifier la voie logique décrite par la structure ;
- un deuxième champ (Version_Number) destiné à indiquer au terminal une évolution des données et /ou une évolution de la structure dynamique correspondant à la transmission desdites nouvelles données sur la voie décrite de sorte que le terminal adapte son filtrage pour récupérer lesdites nouvelles données ;
- un troisième champ (Listen_Time) destiné à indiquer au terminal une durée d'écoute de la voie décrite.

Ledit troisième champ (Listen_Time) représente soit une durée minimum fixe, soit une durée minimum variable, suffisante pour permettre au terminal de récupérer les messages transmis.

Dans une variante de réalisation, les types de voies logiques définies comportent au moins :
- une voie RAPIDE destinée à transmettre les messages EMM à destination de terminaux ayant expressément requis ces messages ;
- une voie DÉDIÉE destinée à transmettre les messages EMM ayant des objectifs fonctionnels identiques ;
- une voie NORMALE destinée à transmettre des messages EMM dont le contenu n'est pas prévisible et qui ne peuvent être différés dans le temps ;
- une voie DIFFÉRÉE destinée à transmettre aux terminaux des messages EMM non urgents et d'objectifs fonctionnels divers ;
- une voie de DELESTAGE destinée à retransmettre aux terminaux des messages ayant déjà été transmis sur une voie autre que la voie DÉDIÉE.

Préférentiellement, pour les voies RAPIDE, NORMALE, DIFFÉRÉE et DÉDIÉE la durée minimum variable est estimée fonction de la cadence de répétition des envois de messages EMM.

Dans un exemple d'application du procédé selon l'invention, les données et/ou services fournis au terminaux représentent des programmes multimédias.

Dans un autre exemple d'application, les données et/ou services fournis aux terminaux représentent des programmes audiovisuels.

Dans les deux types d'applications les messages EMM sont encapsulés dans un format MPEG et sont transmis soit en mode diffusé soit en mode connecté. Outre le contenu de l'EMM, les sections MPEG obtenues comportent alors au moins les informations privées suivantes :
- EMM_XID représentant l'identifiant de l'EMM ;
- LG_EMM représentant la longueur de l'EMM.

Le procédé selon l'invention est mis en oeuvre par un dispositif comportant :
- des moyens pour définir un ensemble de types de messages EMM en fonction d'au moins un critère représentatif du type de données et/ou services fournis ;
- des moyens pour définir un ensemble de types de voies logiques de transmission en fonction du contenu à véhiculer sur chaque voie ;
- des moyens pour affecter à chaque type de message EMM une voie logique de transmission ;
- des moyens pour multiplexer les voies logiques de transmission dans un même flux de données ;
- des moyens pour transmettre ledit flux de données aux terminaux, et
- des moyens pour filtrer, au niveau d'un terminal, les EMM entrants en fonction des types de voies définies.

Dans le mode préféré de réalisation de l'invention, le dispositif comporte :
- des moyens pour associer à chaque type de voies au moins un paramètre (STREAM_TYPE) destiné à indiquer aux terminaux les types d'EMM transitant sur chacune des voies logiques décrites ;
- des moyens pour transmettre le paramètre (STREAM_TYPE) à chaque terminal ;
- des moyens pour permettre à chaque terminal de filtrer les EMM entrants en fonction du paramètre (STREAM_TYPE) et d'au moins un paramètre d'état reflétant le fonctionnement courant du terminal.

### Brève description des dessins

D'autres caractéristiques et avantages de l'invention ressortiront de la description qui va suivre, prise à titre d'exemple non limitatif, en référence aux figures annexées dans lesquelles :
- La figure 1 illustre schématiquement un système dans lequel est utilisé un dispositif de transmission de messages de gestion de titres d'accès (EMM) selon l'invention ;
- la figure 2 représente un schéma fonctionnel du dispositif selon l'invention ;
- la figure 3 représente schématiquement un mode de communication entre un générateur de messages d'EMM et un Multiplexeur selon un mode préféré de réalisation de l'invention.
- la figure 4 illustre schématiquement l'encapsulation d'EMM en section MPEG selon un exemple de mise en oeuvre de l'invention.

### Exposé détaillé de modes de réalisation particuliers

La description qui va suivre se rapporte à une application particulière du procédé selon l'invention dans un système de distribution de programmes audiovisuels à une pluralité de terminaux d'abonnés reliés à un réseau d'échange de données tel que le réseau Internet par exemple ou un réseau privé de diffusion de programmes.

Ce système permet à un premier ensemble 2 d'équipements de gestion d'abonnés SMS, agencés chez un opérateur commercial par exemple, de communiquer, via un deuxième ensemble d'équipements 6 de gestion des titres d'accès des abonnés, avec un troisième ensemble 4 de transmission des titres d'accès (EMM).

Chaque abonné dispose d'un décodeur 8 et d'un processeur de sécurité dans lequel sont inscrits les titres d'accès d'accès.

Le troisième ensemble 4 comporte un premier module 10 désigné dans la suite de la description par B-SAS (pour Broadcast Subscription Autorisation System) permettant d'assurer l'organisation et la diffusion des EMM conformément à des directives issues des équipements du premier ensemble 2. Le premier module B-SAS 10 communique, d'une part, avec des équipements de l'ensemble 6, et d'autre part, avec un deuxième module MUX 12 de multiplexage relié à un troisième module 14 de diffusion des EMM vers le décodeur 8.

L'ensemble 6 d'équipements de gestion des titres d'accès des abonnés comporte un premier équipement SAS 16 assurant la gestion technique des processeurs de sécurité et des titres d'accès et un deuxième équipement STB-MS 18 assurant la gestion des terminaux d'abonnés.

Le premier équipement SAS 16 a pour fonction d'exprimer les demandes de services en provenance des SMS 2 des différents opérateurs en messages EMM exploitables par le processeur de sécurité ou le terminal et de les transmettre au module B-SAS 10 pour la transmission en mode diffusé vers les terminaux d'abonnés, ou à un module I-SAS 17 pour distribuer ces EMM en mode connecté. Le premier équipement SAS 16 permet en outre, d'effectuer auprès du module B-SAS 10, des demandes d'ajout, d'envoi et de remplacement d'EMM à destination des terminaux, ainsi que des demandes de suppression d'envoi d'EMM

Le deuxième équipement STB-MS 18 permet également aux équipements SMS 2 de définir et de maintenir les caractéristiques des terminaux d'abonnés.

Le deuxième équipement STB-MS 18 permet aussi d'effectuer, auprès du module B-SAS 10, des demandes d'ajout, d'envoi et de remplacement d'EMM à destination des terminaux, ainsi que des demandes de suppression d'envoi d'EMM. Cet équipement STB-MS est apte à exprimer les demandes de services en provenance des SMS 2 des différents opérateurs en messages exploitables par le processeur de sécurité ou le terminal et de les transmettre au module I-SAS 17 pour distribuer ces EMM en mode connecté.

Le décodeur 8 situé chez l'abonné contient le processeur de sécurité dans lequel sont enregistrés les titres d'accès d'abonnés et a pour fonction, de façon connue, de traiter des messages EMM contenus dans le flux diffusé, de gérer une interface IHM Homme-Machine présentée à l'abonné et de dialoguer avec le processeur de sécurité de l'abonné et avec le serveur d'un opérateur technique.

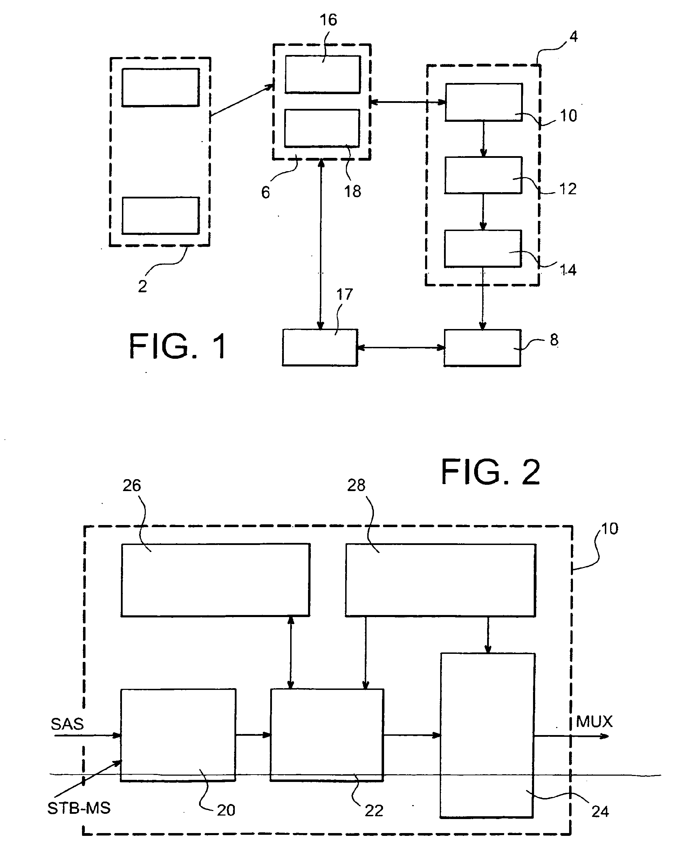

La figure 2 représente un schéma fonctionnel détaillé du module B-SAS 10. Ce dernier comporte un premier bloc 20 destiné à collecter des messages en provenance du ou des premiers équipements SAS 16 ou deuxièmes équipements STB-MS 18, un deuxième bloc 22 destiné à gérer les files d'attente, un troisième bloc 24 destiné à gérer la diffusion des EMM, un quatrième bloc 26, contrôlé par un administrateur, destiné à définir des informations de configuration du système et un cinquième bloc 28 de supervision destiné à collecter des informations techniques et applicatives sur le système.

Les messages collectés par le premier bloc 20 peuvent être des demandes d'ajouts d'EMM, de remplacement ou de suppression d'EMM au moyen d'un protocole applicatif tel que TCP-IP, CORBA, HTTP+XML, RMI ou un protocole propriétaire.

### DEFINITION D'EMM

Le dispositif et le procédé de l'invention permettent de définir un ensemble de types de messages EMM en fonction d'au moins un critère représentatif du type de données et/ou services fournis. A cet effet, les équipements SAS 16 et STB 18 amonts demandent l'insertion d'un EMM dans un cycle en précisant les modalités de diffusion (Référence du modèle de transmission, Date de début et de fin de diffusion de l'EMM) et la description de l'EMM (structure d'entête, gabarit d'entête, contenu de l'EMM).

Préalablement à la diffusion des EMM, on définit une pluralité de types de voies logiques de transmission par un paramètre (STREAM_TYPE) destiné à indiquer aux terminaux les types d'EMM transitant sur chacune des voies logiques décrites. Ce paramètre (STREAM_TYPE) est transmis à chaque terminal sous forme d'une structure de données dynamique représentant une voie logique de contrôle comportant au moins l'un des champs suivants :
- un premier champ (EMM_XID) destiné à permettre au terminal d'identifier la voie logique décrite par la structure,
- un deuxième champ (Version_Number) destiné à indiquer au terminal une évolution de la structure dynamique. Cette évolution signale au terminal la transmission de nouvelles données sur la voie décrite de sorte que ce dernier adapte son filtrage pour récupérer ces nouvelles données ;
- un troisième champ (Listen_Time) destiné à indiquer au terminal une durée d'écoute de la voie décrite.

Une voie logique est une sous-partie d'un flux identifié par un PID dans le signal diffusé. La définition de telles voies logiques permet de les multiplexer au sein d'un même flux dans lequel des EMM transitant sur une même voie ont le même identifiant EMM_XID. Ainsi, à la réception, le terminal peut filtrer les EMM entrants sur un flux en ne sélectionnant que les EMM d'une ou de plusieurs voies particulières. Pour cela, le terminal filtre les EMM entrants en positionnant un masque sur l'entête du flux de données.

Dans un mode particulier de réalisation, la taille de l'identifiant EMM_XID est de 8 bits, ce qui permet de multiplexer jusqu'à 8 voies EMM au sein d'un flux en affectant un bit par voie.

Pour affecter à chaque type de message EMM au moins une voie parmi les voies logiques de transmission définies, le module B-SAS 10 dispose des caractéristiques techniques liées aux modèles de transmission, lui permettant ainsi de déterminer la voie de diffusion d'un EMM. Des décalages sur la date de début et la date de fin de diffusion sont déterminés pour chacun des modèles. Les voies logiques définies sont multiplexées dans un même flux de données puis transmises aux terminaux.

### AJOUT D'EMM

Lors de la demande d'ajout d'un EMM, le module B-SAS 10 effectue les traitements suivants :
### Analyse syntaxique de la requête,
### Vérification de l'existence du modèle de transmission,
### Vérification de la cohérence des dates de diffusion,
### Vérification de la validité de l'identifiant de l'EMM,
### Mise à jour de la base de donnée,
### Aiguillage de l'EMM vers le bloc 22 de gestion des files d'attente,
### Gestion des erreurs (surcharge de l'équipement...),
### Acquittement de la demande.

### REMPLACEMENT D'EMM

Les équipements SAS 16 ou STB-MS 18 amonts peuvent demander le remplacement d'un EMM dans un cycle en précisant l'identifiant de l'EMM à remplacer. Ce message sera utilisé, par exemple, par le premier équipement SAS 16 pour enrichir la population visée par un EMM dans le cadre d'une inscription à une offre commerciale.

Lors de la demande d'un remplacement d'EMM, le module B-SAS 10 effectue les traitements suivants :
### Analyse syntaxique de la requête ;
### vérification de l'existence du modèle de transmission ;
### Vérification de la cohérence des dates de diffusion ;
### Vérification de la validité de l'identifiant de l'EMM à remplacer ;
### Vérification de la validité de l'identifiant du nouvel EMM ;
### Mise à jour de la base de donnée ;
### Aiguillage de l'EMM vers le bloc 22 de gestion des files d'attente ;
### Gestion des erreurs (surcharge de l'équipement...) ;
### Acquittement de la demande.

### SUPPRESSION D'EMM

Lors de la demande d'une suppression d'EMM, le module B-SAS 10 effectue les traitements suivants :
### Analyse syntaxique de la requête ;
### Vérification de la validité de l'identifiant de l'EMM ;
### Mise à jour de la base de donnée ;
### Suppression de la diffusion de l'EMM sur la voie associée ;
### Gestion des erreurs ;
### Acquittement de la demande.

Notons que, même si le module B-SAS 10 gère seul la suppression des EMM en fin de période de validité, les équipements SAS 16 ou STB-MS 18 peuvent supprimer explicitement un EMM de la diffusion.

### GESTION DES FILES D'ATTENTE

Le module B-SAS 10 doit permettre de répondre aux contraintes, notamment celles des terminaux et, dans un même temps, celles d'offrir une qualité de service régulière. A cet effet, le deuxième bloc 22 permet :
### d'organiser les EMM diffusés afin de permettre au terminal de les prendre en compte ;
### de contrôler le débit des voies EMM sur un transpondeur. Généralement, ce débit est de l'ordre de 50 à 500 kbits/seconde ;
### de programmer la diffusion de certains EMM express en temps très court ;
### de programmer la diffusion de certains EMM pendant un temps suffisamment long pour être traités par tous les terminaux.
### d'aiguiller les EMM qui n'ont pas de caractère d'urgence, sur des files de messages aux caractéristiques différentes, et d'organiser ces files ou voies logiques de sorte que le débit d'EMM soit acceptable pour un terminal.

### DESCRIPTION DES TYPES DE VOIE DEFINIS

Dans un mode préféré de réalisation de l'invention, les types de voies logiques définies comportent une voie RAPIDE, une voie DÉDIÉE, une voie NORMALE, une voie DIFFÉRÉE et une voie de DELESTAGE.

La voie RAPIDE est utilisée dans des cas où le terminal est de façon certaine à l'écoute de cette voie au moment de la diffusion d'un EMM le concernant. L'utilisation la plus courante est la diffusion de titres d'accès spécifiques à un service interactif sur demande du terminal à un fournisseur de service. Elle peut être aussi utilisée sur réclamation d'un usager. Les EMM sont répétés sur cette voie rapide un certain nombre de fois, avec entre chaque envoi une temporisation, puis sont supprimés de la diffusion. Si le nombre de messages sur la file devient trop important, le temps de cycle de la voie approche la limite de la garantie de qualité de service.

La voie DÉDIÉE véhicule des EMM dont les caractéristiques sont identiques. Deux types d'EMM sont identifiés pour composer des voies dédiées : les EMM de renouvellements de titres d'accès et les EMM de changement de clés.

Chaque voie dédiée est régulée indépendamment des autres voies, que ce soit pour l'organisation de la diffusion ou pour le respect du débit alloué à la voie. Seules les voies rapides peuvent interrompre leur fonctionnement.

La voie NORMALE est obligatoirement présente et permet d'émettre des EMM quelconques. Elle véhicule l'ensemble des messages nécessaires à l'abonné dans son usage permanent (gestion processeur de sécurité, données privées ...).

En fonctionnement, le terminal écoute ce type de voie durant le temps spécifié dans le descriptif de la voie, ou lors d'un changement dans le descriptif de la voie. Cette écoute peut être permanente.

La voie DIFFÉRÉE n'est présente que périodiquement dans le flux. Elle permet d'émettre des EMM pouvant accepter un traitement décalé tels que des EMM de gestion technique du processeur de sécurité ou d'information. La lecture de cette voie par le terminal sera provoquée ponctuellement par changement du numéro de version de la voie.

La voie de DELESTAGE permet de décharger les autres voies logiques ayant déjà été diffusées durant plusieurs cycles et ayant été prises en compte par le terminal dans un bon nombre de cas. Les modalités de diffusion des EMM sont spécifiées dans le modèle de transmission. Le terminal se mettra à l'écoute de cette voie au démarrage du terminal ou sur changement du numéro de version de la voie.

Selon un mode préféré de mise en oeuvre du procédé, une voie de contrôle, également dénommée voie O, véhicule un EMM chiffré de description à destination des terminaux, dans lequel est décrit les caractéristiques techniques des voies logiques partageant le même PID. Cet EMM de description est généré par le module B-SAS 10 en fonction des paramètres de configuration, et du contenu à véhiculer sur les voies.

A la réception de l'EMM de description, chaque terminal se positionne sur cette voie 0 afin de récupérer et d'analyser le descriptif pour déterminer les voies logiques devant être écoutées et sous quelles conditions. Chaque terminal calculera les critères de filtrage en fonction du résultat de l'analyse des descriptifs.

Les EMM diffusés doivent répondre aux contraintes suivantes :
La période de diffusion de l'EMM doit être valide.
   - pour un EMM diffusé sur une voie RAPIDE, le nombre maximum de diffusion ne doit pas être atteint ;
   - pour un EMM véhiculé sur les autres types de voies, la date de mise en diffusion doit être comprise entre la date de début et la date de fin de diffusion spécifiée.

L'ordonnancement de l'envoi des EMM permet au terminal de capter l'ensemble des EMM du flux en un minimum de cycles.

Pour réaliser cette contrainte un algorithme dit de diffusion aléatoire organise l'envoi des EMM en ordonnançant aléatoirement les EMM à envoyer dans un cycle de diffusion.

La temporisation entre deux EMM véhiculés sur la voie de contrôle (voie O) doit être au minimum de 100 ms.

### GESTION DE LA DIFFUSION DES EMM

Dans l'exemple de réalisation décrit, la définition des ressources de diffusion et la gestion de la diffusion des EMM sont conformes au protocole EMMG/PDG, partie de la norme ETSI TS 103 197 "Head-End implementation of DVB Simulcrypt". Ce protocole prévoit l'utilisation de "Channel" et de "streams" désignant dans la suite de la description respectivement "canal" et "flux" pour dialoguer avec le module MUX 12 de multiplexage.

### GESTION DES "CHANNEL" ET DES "STREAM"

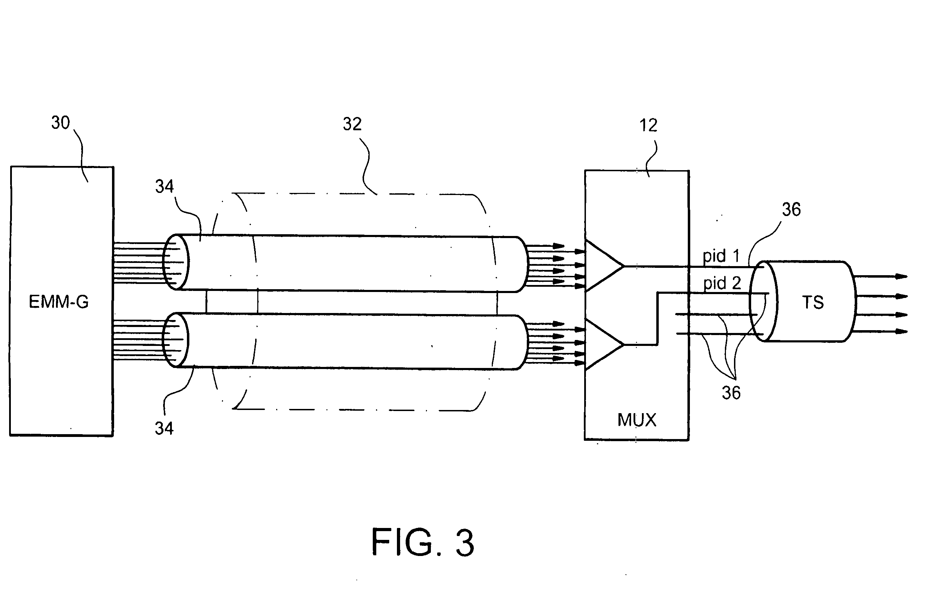

Comme cela est illustré schématiquement par la figure 3, la communication entre un générateur 30 de messages EMM et le module MUX 12 est réalisée à travers un canal 34 identifié par un identificateur client_id identifiant le système d'accès conditionnel et pouvant être particularisé par opérateur.

Le module B-SAS 4 établit un "channel" 32 par opérateur ou par groupe d'opérateurs, qui permet la création d'un ou de plusieurs "streams" 34 identifiés par des stream_id (Stream_id 1, Stream_id 2, ...) uniques au sein du "channel". Un "stream" 34 est composé d'une voie de commande et d'une voie de données sur laquelle transitent les EMM en paquets MPEG2 TS. La voie de données peut s'appuyer sur les protocoles TCP/IP ou sur UDP/IP en mode diffusé.

Chaque "streams" 34 donne lieu à la création d'une composante 36 du transpondeur identifiée par un identifiant de packet PID (pour Packet Identifier) en sortie du module MUX 12.

Selon une variante de réalisation, par défaut, le module B-SAS 4 ne crée qu'un seul "stream" 34. Un second "stream" 34 est créé si le nombre de voies pour l'opérateur dépasse 8 (nombre maximum de voies multiplexées sur un même flux EMM). La bande passante est négociée entre le générateur 30 d'EMM et le module de multiplexage MUX 12 à l'initiative du générateur 30 pour chaque "stream" 34.

### GESTION DE L'ENVOI DES EMM

La préparation des EMM pour leur diffusion vers le multiplexeur 12 s'effectue en deux étapes. La première étape consiste en l'encapsulation des EMM en section MPEG 2, la seconde étape consiste à composer des paquets de transport MPEG 2 TS à envoyer au(x) MUX 12.

### Encapsulation en section MPEG 2

Les sections MPEG obtenues par encapsulation comportent au moins les informations privées suivantes :
- EMM_XID représentant l'identifiant de l'EMM ;
- LG_EMM représentant la longueur de l'EMM, et
- le contenu de l'EMM.

Les règles d'encapsulation sont les suivantes :
### Un EMM et un seul par section,
### Une ou plusieurs sections chaînées par EMM.

Le module B-SAS 10 compose des paquets MPEG2 TS de taille fixe (188 octets, entête comprise). Les sections MPEG2 se trouvent donc à l'intérieur du paquet ou à cheval sur deux ou plus de deux paquets.

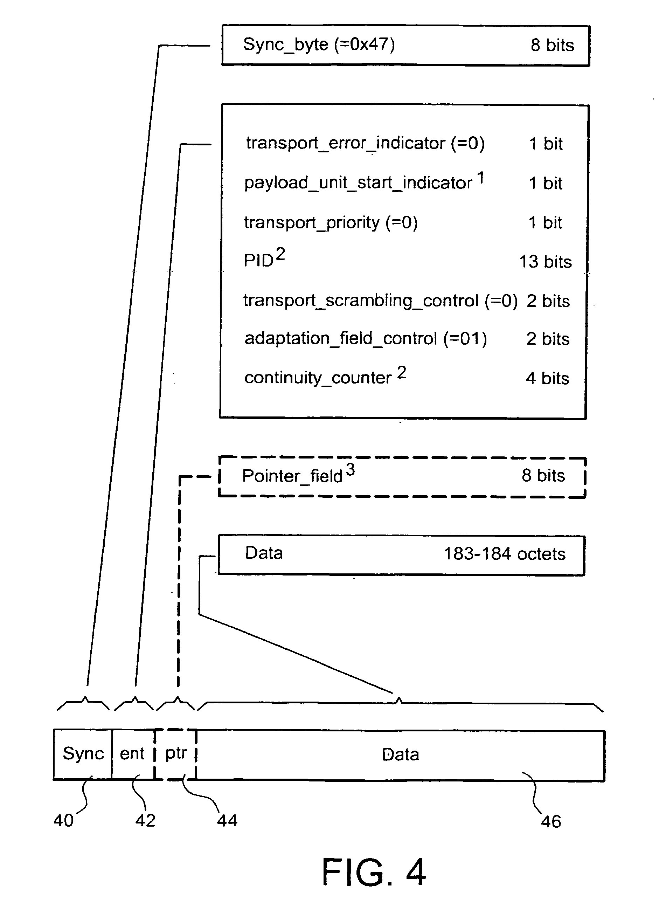

Un paquet TS respecte le format illustré schématiquement par la figure 4 conformément à la norme ISO/1EC 13818-1 "Generic coding of moving pictures and associated audio information : Systems". Ce paquet comporte un premier champ 40 de synchronisation Sync comprenant huit bits, un entête (ent) 42, un pointeur "ptr" 44 et un bloc 46 comprenant les données utiles (DATA) ;

L'entête 42 comporte :
- un bit indicateur d'erreur de transport (transport_error_indicator) ;
- un bit indicateur du début d'une section dans le paquet (payload_unit_start_indicator) ;
- un bit indicateur de la priorité de transport (transport priority) ;
- un bloc de treize bits représentant l'identificateur PID du paquet ;
- deux bits de contrôle d'embrouillage;
- deux bits de contrôle du champ d'adaptation;
- deux bits d'indice de continuité.

Le bit payload_unit_start_indicator indique si une section débute dans le paquet. Si c'est le cas, ce bit vaut 1 et le champ "ptr" est renseigné et indique le rang dans les données utiles 46 du début de la section.

Si ce n'est pas le cas, le bit payload unit_start_indicator vaut O et le champ le champ "ptr" n'existe pas. C'est le cas d'une section sur plus de 2 paquets ou d'un paquet partiellement rempli.

### ECHANGES DU MODULE B_SAS 10 AVEC LES AUTRES EQUIPEMENTS.

Les besoins des différents acteurs sollicitant l'équipement sont exprimés au module BSAS 10 par l'intermédiaire d'un événement déclencheur qui peut être un message transitant sur les interfaces de l'équipement émetteur/BSAS, ou des demandes émanant d'un exploitant par exemple.

### BESOINS DU PREMIER ÉQUIPEMENT SAS 16 ENVOI D'UN EMM

Le premier équipement SAS 16 communique au module B_SAS 10 des messages EMM à diffuser vers un décodeur 8. Cette communication s'effectue par une requête dans laquelle le premier équipement SAS 16 précise les modalités de diffusion de l'EMM notamment le modèle de transmission à utiliser et les dates de début et de fin de transmission. Le module B_SAS 10 constitue et organise l'envoi des EMM sur les voies logiques spécifiées par le modèle de transmission, et en fonction des dates de diffusions sur lesquelles peuvent être appliqués des décalages temporels.

### REMPLACEMENT D'UN EMM

L'équipement SAS 16 peut être amené à optimiser la diffusion des EMM à destination de module B_SAS 10. Dans ce cas, le premier équipement SAS 16 remplace un EMM en diffusion, par un autre EMM spécifiant une population plus complète. Le premier équipement SAS 16 demande au module B_SAS 10 le remplacement d'un EMM par un autre dans la diffusion.

### SUPPRESSION DE L'ENVOI D'UN EMM

Le premier équipement SAS 16 peut également demander au B_SAS 10 la suppression immédiate d'un EMM, de la diffusion en cours.

### BESOINS DU DEUXIÈME ÉQUIPEMENT STB-MS 18

Le STB-MS gère le parc de terminaux d'un ou plusieurs opérateurs. A ce titre, cet équipement est susceptible d'effectuer, auprès du B_SAS 10, des demandes d'envoi, ou de remplacement, d'EMM à destination des terminaux, ainsi que des demandes de suppression d'envoi d'EMM.

### ENVOI D'UN EMM

Les EMM à destination du terminal sont fournis au module B_SAS 10 via un message de l'interface STB-MS/BSAS. Ce message et le traitement associé sont identiques à ceux du premier équipement SAS 16.

### REMPLACEMENT D'UN EMM

L'équipement STB-MS 18, comme le premier équipement SAS 16, peut être amené à optimiser la diffusion de ses EMM et utilise à cet effet la même commande que le premier équipement SAS 16. L'équipement STB-MS 18 permet également aux équipements SMS 2 de définir et de maintenir les caractéristiques des terminaux d'abonnés.

### SUPPRESSION DE L'ENVOI D'UN EMM

De même, le deuxième équipement STB-MS 18 peut demander au module B_SAS 10 la suppression d'un EMM de la diffusion en cours.

### BESOINS DU DÉCODEUR

Le terminal reçoit des flux d'EMM émis par différents modules B_SAS 10. Ces EMM sont fournis par les différents équipements connectés au module B_SAS 10 à savoir le ou les SAS 16 et le ou les STB-MS 18 et sont émis soit à destination du processeur de sécurité, d'un ou plusieurs processeurs de sécurité, ou d'un ou plusieurs terminaux.

### RECEPTION DU DESCRIPTIF DES VOIES LOGIQUES

Le terminal doit pouvoir extraire du signal les messages de gestion qui le concerne. Pour réaliser cette fonction le module B_SAS 10 communique sur la voie de contrôle, le descriptif et les modalités de diffusion des différentes voies logiques constituant le flux.

### RECEPTION DES EMM EMIS PAR LE MODULE B_SAS 10

Le terminal doit pouvoir extraire d'une voie logique l'ensemble des messages de gestion qui le concerne et au besoin les reconstituer dans le cas d'EMM chainés sur plusieurs sections. De plus, certains composants du terminal, tels les démultiplexeurs, imposent des contraintes de diffusion notamment sur le nombre d'EMM diffusés pour un même processeur de sécurité dans des périodes de temps définies.

Le Module B_SAS 10 prend en compte ces contraintes en appliquant un algorithme de diffusion aléatoire des EMM, et en respectant les contraintes MPEG de découpage en section.

## Revendications

1. Procédé de transmission de messages de gestion de titres d'accès (EMM) à des données et/ou services fournis à une pluralité de terminaux dans un réseau d'échange de données dans lequel chaque terminal reçoit un contenu embrouillé par une clé CW transmise dans un message de contrôle d'accès ECM et au moins une clé de déchiffrement de ladite clé CW transmise dans un message de gestion de titre d'accès EMM, procédé **caractérisé en ce qu'**il comporte les étapes suivantes :
A l'émission :
- définir un ensemble de types de messages EMM en fonction d'au moins un critère représentatif du type de données et/ou services fournis ;
- définir une pluralité de types de voies logiques de transmission et associer à chaque type de voie au moins un paramètre (STREAM_TYPE) destiné à indiquer aux terminaux les types d'EMM transitant sur chacune des voies logiques décrites;
- affecter à chaque type de message EMM au moins une voie parmi les voies logiques de transmission définies
- transmettre le paramètre (STREAM_TYPE) et lesdites voies logiques à chaque terminal ;
- multiplexer les voies logiques de transmission dans un même flux de données ;
- transmettre ledit flux de données aux terminaux ;
et à la réception :
- chaque terminal filtre les EMM entrants en fonction du paramètre (STREAM_TYPE) et d'au moins un paramètre d'état dépendant du fonctionnement courant du terminal.

2. Procédé selon la revendication 1, **caractérisé en ce que** ledit paramètre (STREAM_TYPE) est transmis à chaque terminal dans une structure de données dynamique représentant une voie logique de contrôle.

3. Procédé selon la revendication 2, **caractérisé en ce que** ladite structure de données dynamique est transmise dans un EMM chiffré.

4. Procédé selon la revendication 3, **caractérisé en ce que** ladite structure dynamique comporte au moins l'un des champs suivants :
- un premier champ (EMM_XID) destiné à permettre au terminal d'identifier la voie logique décrite par la structure,
- un deuxième champ (Version_Number) destiné à indiquer au terminal une évolution des données et/ou une évolution de la structure dynamique correspondant à la transmission desdites nouvelles données sur la voie décrite de sorte que le terminal adapte son filtrage pour récupérer lesdites nouvelles données,
- un troisième champ (Listen_Time) destiné à indiquer au terminal une durée d'écoute de la voie décrite.

5. Procédé selon la revendication 4, **caractérisé en ce que** ledit troisième champ (Listen_Time) représente une durée minimum fixe suffisante pour récupérer les messages transmis.

6. Procédé selon la revendication 4, **caractérisé en ce que** ledit troisième champ (Listen_Time) représente une durée minimum variable en fonction de la cadence de répétition des envois de messages EMM.

7. Procédé selon l'une des revendications 5 ou 6, **caractérisé en ce que** les types de voies logiques définies comportent au moins :
- une voie RAPIDE destinée à transmettre les messages EMM à destination de terminaux ayant requis ces messages ;
- une voie DÉDIÉE destinée à transmettre les messages EMM ayant des objectifs fonctionnels identiques ;
- une voie NORMALE destinée à transmettre des messages EMM dont le contenu n'est pas prévisible et qui ne peuvent être différés dans le temps ;
- une voie DIFFÉRÉE destinée à transmettre aux terminaux des messages EMM non urgents et d'objectifs fonctionnels divers ;
- une voie de DELESTAGE destinée à retransmettre aux terminaux des messages ayant déjà été transmis sur une voie autre que la voie DÉDIÉE.

8. Procédé selon les revendications 6 et 7, **caractérisé en ce que** pour les voies RAPIDE, NORMALE, DIFFÉRÉE et DÉDIÉE la durée minimum variable est estimée en fonction de la cadence de répétition des envois de messages EMM.

9. Procédé selon l'une des revendications 1 à 8, **caractérisé en ce que** les données et/ou services fournis aux terminaux représentent des programmes multimédias.

10. Procédé selon la revendication 9, **caractérisé en ce que** les données et/ou services fournis aux terminaux représentent des programmes audiovisuels.

11. Procédé selon l'une des revendications 1 à 10, **caractérisé en ce que** les messages EMM sont transmis en mode diffusé.

12. Procédé selon l'une des revendications 1 à 10, **caractérisé en ce que** les messages EMM sont transmis en mode connecté.

13. Procédé selon l'une des revendications 11 ou 12, les messages EMM sont encapsulés dans un format MPEG.

14. Procédé selon la revendication 13, **caractérisé en ce que** les sections MPEG obtenues comportent au moins les informations privées suivantes :
- EMM_XID représentant l'identifiant de l'EMM ;
- LG_EMM représentant la longueur de l'EMM, et
- le contenu de l'EMM.

15. Dispositif de transmission de messages de contrôle d'accès (EMM) à des données et/ou services fournis à une pluralité de terminaux dans un réseau d'échange de données, **caractérisé en ce qu'**il comporte :
- des moyens (16, 18) pour définir un ensemble de types de messages EMM en fonction d'au moins un critère représentatif du type de données et/ou services fournis ;
- des moyens (10) pour définir un ensemble de types de voies logiques de transmission en fonction du contenu à véhiculer sur chaque voie ;
- des moyens (4) pour affecter à chaque type de message EMM une voie logique de transmission et pour associer à chaque type de voies au moins un paramètre (STREAM_TYPE) destiné à indiquer aux terminaux les types d'EMM transitant sur chacune des voies logiques décrites ;
- des moyens (12) pour multiplexer les voies logiques de transmission dans un même flux de données ;
- des moyens pour transmettre ledit flux de données aux terminaux, et
- des moyens pour filtrer, au niveau d'un terminal, les EMM entrants en fonction des types de voies définies.

16. Dispositif selon la revendication 15, **caractérisé en ce qu'**il comporte :
- des moyens (36) pour transmettre le paramètre (STREAM_TYPE) à chaque terminal ;
- des moyens (22) pour permettre à chaque terminal de filtrer les EMM entrants en fonction du paramètre (STREAM_TYPE) et d'au moins un paramètre d'état reflétant le fonctionnement courant du terminal.

## Claims

1. Method for transmitting entitlement management messages (EMM) controlling access to data and/or services to be provided to a plurality of terminals in a data exchange network, in which each terminal receives a content scrambled by a key (CW) transmitted in an entitlement control message (ECM) and at least one decrypting key of said key (CW) transmitted in an entitlement management message (EMM), **characterized in that** it comprises the following steps:
at the transmission side:
- defining a set of EMM type messages as a function of at least one criterion representative of the type of data and/or services provided;
- defining a plurality of types of logical transmission channels and associate at least one parameter (STREAM_TYPE) to each type of channel to inform terminals of the EMM types transiting on each described logical channel;
- assigning at least one channel among the defined logical transmission channels, to each EMM message type;
- transmitting the (STREAM_TYPE) parameters and the said logical channels to each terminal;
- multiplexing the logical transmission channels in the same data stream;
- transmitting the said data stream to terminals; and at the reception side:
- each terminal filters incoming EMMs as a function of the (STREAM_TYPE) parameter and at least one state parameter depending on the routine operation of the terminal.

2. Method according to claim 1, **characterized in that** the said (STREAM_TYPE) parameter is transmitted to each terminal in a dynamic data structure representing a logical control channel.

3. Method according to claim 2, **characterized in that** the said dynamic data structure is transmitted in an encrypted EMM.

4. Method according to claim 3, **characterized in that** the said dynamic structure comprises at least one of the following fields:
- a first field (EMM_XID) for enabling the terminal to identify the logical channel described by the structure;
- a second field (Version_Number) for informing the terminal about a change to data and/or a change to the dynamic structure corresponding to transmission of the said new data on the described channel such that the terminal adapts its filtering to retrieve the said new data;
- a third field (Listen_time) for informing the terminal about a listen time on the described channel.

5. Method according to claim 4, **characterized in that** the said third field (Listen_time) represents a minimum fixed duration sufficiently long to enable the terminal to retrieve the transmitted messages.

6. Method according to claim 4, **characterized in that** the said third field (Listen_time) represents a minimum variable duration, as a function of the repetition rate at which EMM messages are sent.

7. Method according to either of claim 5 or 6, **characterized in that** the types of defined logical channels comprise at least:
- a FAST channel for transmitting EMM messages to terminals that expressly requested these messages;
- a DEDICATED channel for transmitting EMM messages with identical functional objectives;
- a NORMAL channel for transmitting EMM messages for which the contents are not predictable and may not be delayed in time;
- a DELAYED channel for transmitting non-urgent EMM messages with various functional objectives, to terminals;
- a LOAD SHEDDING channel for retransmitting messages that have already been transmitted on a channel other than the DEDICATED channel, to terminals.

8. Method according to claim 6 and 7, **characterized in that** the minimum variable duration for the FAST, NORMAL, DELAYED and DEDICATED channels is estimated as a function of the repetition rate at which EMM messages are sent.

9. Method according to any one of claims 1 to 8, **characterized in that** the data and/or services provided to terminals represent multimedia programs.

10. Method according to claim 9, **characterized in that** the data and/or services provided to terminals represent audiovisual programs.

11. Method according to any one of claims 1 to 10, **characterized in that** the EMM messages are transmitted in broadcast mode.

12. Method according to any one of claims 1 to 10, **characterized in that** the EMM messages are transmitted in connected mode.

13. Method according to either of claims 11 or 12, **characterized in that** EMM messages are encapsulated in MPEG format.

14. Method according to claim 13, **characterized in that** the MPEG payload units obtained contain at least the following private information:
- EMM_XID representing the identifier of the EMM;
- LG_EMM representing the length of the EMM and its contents.

15. Device for transmitting entitlement management messages (EMM) controlling access to data and/or services to be provided to a plurality of terminals in a data exchange network, **characterized in that** it comprises:
- means (16, 18) for defining a set of EMM type messages as a function of at least one criterion representative of the type of data and/or services provided;
- means (10) for defining several types of logical transmission channels as a function of the contents to be transmitted on each channel;
- means (4) for assigning a logical transmission channel to each EMM message type and for associating with each type of channel at least one (STREAM_TYPE) parameter for indicating to the terminals the EMM types transiting on each of the logical channels described;
- means for multiplexing the logical transmission channels in the same data stream;
- means for transmitting the said data stream to terminals; and
- means for filtering incoming EMMs into a terminal, as a function of defined channel types.

16. Device according to claim 15, **characterized in that** it comprises:
- means (36) for transmitting the (STREAM_TYPE) parameters to each terminal;
- means (22) for enabling each terminal to filter incoming EMMs as a function of the (STREAM_TYPE) parameter, and at least one status parameter reflecting routine operation of the terminal.

## Patentansprüche

1. Verfahren zur Übertragung von Steuernachrichten von Zugangsberechtigungen (EMM) zu Daten und/oder Diensten, die mehreren Endgeräten in einem Datenaustauschnetz geliefert werden, in dem jedes Endgerät einen Inhalt empfängt, der von einem in einer Zugangskontrollnachricht ECM übertragenen CW-Schlüssel verschleiert ist, sowie mindestens einen Schlüssel zur Entschlüsselung des in einer Steuernachricht von Zugangsberechtigungen EMM übertragenen CW-Schlüssels, wobei das Verfahren **dadurch gekennzeichnet ist, dass** es die folgenden Schritte umfasst:
beim Senden:
- Definieren einer Einheit von EMM-Nachrichtentypen in Abhängigkeit von mindestens einem Kriterium, das für den gelieferten Daten- und/oder Dienstleistungstyp repräsentativ ist,
- Definieren mehrerer logischer Übertragungswegtypen und Zuordnen zu jedem Wegtyp mindestens eines Parameters (Stream_Type), der/die dazu bestimmt ist/sind, den Endgeräten die auf jedem der beschriebenen logischen Wege durchlaufenden EMM-Typen anzugeben,
- Zuweisen mindestens eines Wegs unter den definierten logischen Übertragungswegen zu jedem EMM-Nachrichtentyp,
- Übertragen des Parameters (Stream_Type) und der logischen Wege zu jedem Endgerät,
- Multiplexen der logischen Übertragungswege in ein- und demselben Datenfluss,
- Übertragen des Datenflusses zu den Endgeräten,
und beim Empfang:
- jedes Endgerät filtert die eingehenden EMM in Abhängigkeit von dem Parameter (Stream_Type) und von mindestens einem Zustandsparameter, der von der aktuellen Funktionsweise des Endgerätes abhängt.

2. Verfahren nach Anspruch 1, **dadurch gekennzeichnet, dass** der Parameter (Stream_Type) an jedes Endgerät in einer dynamischen Datenstruktur übertragen wird, die einen logischen Steuerweg darstellt.

3. Verfahren nach Anspruch 2, **dadurch gekennzeichnet, dass** die dynamische Datenstruktur in einem verschlüsselten EMM übertragen wird.

4. Verfahren nach Anspruch 3, **dadurch gekennzeichnet, dass** die dynamische Struktur mindestens eines der folgenden Felder aufweist:
- ein erstes Feld (EMM-XID), das dazu bestimmt ist, dem Endgerät eine Identifizierung des von der Struktur beschriebenen logischen Wegs zu ermöglichen,
- ein zweites Feld (Version_Number), das dazu bestimmt ist, dem Endgerät eine Evolution der Daten und/oder eine Evolution der dynamischen Struktur anzugeben, die der Übertragung der neuen Daten auf dem beschriebenen Weg entspricht, so dass das Endgerät seine Filterung anpasst, um die neuen Daten zu erfassen,
- ein drittes Feld (Listen_Time), das dazu bestimmt ist, dem Endgerät eine Abhördauer des beschriebenen Wegs anzugeben.

5. Verfahren nach Anspruch 4, **dadurch gekennzeichnet, dass** das dritte Feld (Listen_Time) eine feststehende Minimal-Zeitdauer darstellt, die ausreicht, um die übertragenen Nachrichten zu erfassen.

6. Verfahren nach Anspruch 4, **dadurch gekennzeichnet, dass** das dritte Feld (Listen_Time) eine variable Minimal-Zeitdauer als Funktion der Wiederholungsrate der EMM-Nachrichtensendungen darstellt.

7. Verfahren nach einem der Ansprüche 5 oder 6, **dadurch gekennzeichnet, dass** die definierten Typen logischer Wege mindestens umfassen:
- einen SCHNELLEN Weg, der zur Übertragung der EMM-Nachrichten zu Endgeräten bestimmt ist, welche diese Nachrichten angefordert haben,
- einen DEDIZIERTEN Weg, der dazu bestimmt ist, die EMM-Nachrichten mit identischen funktionalen Zielsetzungen zu übertragen,
- einen NORMALEN Weg, der dazu bestimmt ist, die EMM-Nachrichten zu übertragen, deren Inhalt nicht vorhersehbar ist, und die zeitlich nicht versetzt werden können,
- einen ZEITVERSETZTEN Weg, der dazu bestimmt ist, den Endgeräten nicht-dringende EMM-Nachrichten sowie EMM-Nachrichten mit unterschiedlichen funktionalen Zielsetzungen zu übertragen,
- einen ENTLASTUNGS-Weg, der dazu bestimmt ist, den Endgeräten Nachrichten von neuem zu übertragen, die bereits auf einem anderen Weg als dem DEDIZIERTEN Weg übertragen worden sind.

8. Verfahren nach den Ansprüchen 6 und 7, **dadurch gekennzeichnet, dass** für die Wege SCHNELL, NORMAL, ZEITVERSETZT und DEDIZIERT die variable Minimal-Zeitdauer in Abhängigkeit von der Wiederholfrequenz der EMM-Nachrichtensendungen geschätzt wird.

9. Verfahren nach einem der Ansprüche 1 bis 8, **dadurch gekennzeichnet, dass** die Daten und/oder Dienstleistungen, die den Endgeräten bereitgestellt werden, Multimedia-Programme darstellen.

10. Verfahren nach Anspruch 9, **dadurch gekennzeichnet, dass** die Daten und/oder Dienstleistungen, die den Endgeräten bereitgestellt werden, audiovisuelle Programme darstellen.

11. Verfahren nach einem der Ansprüche 1 bis 10, **dadurch gekennzeichnet, dass** die EMM-Nachrichten im Diffusionsmodus übertragen werden.

12. Verfahren nach einem der Ansprüche 1 bis 10, **dadurch gekennzeichnet, dass** die EMM-Nachrichten im Verbindungsmodus übertragen werden.

13. Verfahren nach einem der Ansprüche 11 oder 12, wobei die EMM-Nachrichten in ein MPEG-Format eingebettet sind.

14. Verfahren nach Anspruch 13, **dadurch gekennzeichnet, dass** die erhaltenen MPEG-Abschnitte mindestens die folgenden Privat-Informationen umfassen:
- EMM_XID, das den Identifizierer des EMM darstellt,
- LG_EMM, das die Länge des EMM darstellt, und
- den Inhalt des EMM.

15. Vorrichtung zur Übertragung von Nachrichten zur Kontrolle des Zugangs (EMM) zu Daten und/oder Dienstleistungen, die mehreren Endgeräten in einem Datenaustauschnetz bereitgestellt werden, **dadurch gekennzeichnet, dass** sie umfasst:
- Mittel (16,18) zum Definieren einer Einheit von EMM-Nachrichtentypen in Abhängigkeit von mindestens einem Kriterium, das für den gelieferten Daten- und/oder Dienstleistungstyp repräsentativ ist,
- Mittel (10) zum Definieren einer Einheit von logischen Übertragungswegtypen in Abhängigkeit von dem auf jedem Weg zu transportierenden Inhalt,
- Mittel (4) zum Zuweisen eines logischen Übertragungswegs zu jedem EMM-Nachrichtentyp und zum Assoziieren jedes Wegtyps mit mindestens einem Parameter (Stream_Type), der dazu bestimmt ist, den Endgeräten die EMM-Typen anzugeben, die auf jedem der beschriebenen logischen Wege transportiert werden,
- Mittel (12) zum Multiplexen der logischen Übertragungswege in ein- und denselben Datenfluss,
- Mittel zum Übertragen des Datenflusses zu den Endgeräten, und
- Mittel zum Filtern, auf der Ebene eines Endgeräts, der eingehenden EMM in Abhängigkeit von den definierten Wegtypen.

16. Vorrichtung nach Anspruch 15, **dadurch gekennzeichnet, dass** sie umfasst:
- Mittel (36) zum Übertragen des Parameters (Stream_Type) zu jedem Endgerät,
- Mittel (22), um jedem Endgerät die Filterung der eingehenden EMM in Abhängigkeit von dem Parameter (Stream_Type) und von mindestens einem Zustandsparameter, der den aktuellen Funktionsmodus des Endgeräts wiedergibt, zu ermöglichen.
